Europäisches Patentamt

European Patent Office

Office européen des brevets

(11) Publication number: **0 302 566**
**A2**

# EUROPEAN PATENT APPLICATION

(21) Application number: 88201648.8

(22) Date of filing: 29.07.88

(51) Int. Cl.⁴: **A01B 39/18 , A01B 39/19 , A01B 33/02 , A01K 5/00 , A01B 49/06**

(30) Priority: 03.08.87 NL 8701825
15.01.88 NL 8800092

(43) Date of publication of application:
08.02.89 Bulletin 89/06

(84) Designated Contracting States:
DE FR GB NL

(71) Applicant: **Liets Agrarische Technieken B.V.**
**Wilgenkamp 74**
**NL-7581 HD Losser(NL)**

(72) Inventor: **Liet, Fredericus**
**Wilgenkamp 74**
**NL-7581 HD Losser(NL)**

(74) Representative: **Schumann, Bernard Herman Johan et al**
**OCTROOIBUREAU ARNOLD & SIEDSMA**
**Sweelinckplein 1**
**NL-2517 GK The Hague(NL)**

(54) **Device for working more or less loose material.**

(57) The invention relates to a device for the working of more or less loose material, such as mixing and levelling of animal feed in a storage holder, working of a surface layer of ground material, such as the aerating, levelling and harrowing thereof and/or the removing of weeds therefrom, and the chopping of those weeds, the distributing and mixing of mixed manure through a surface layer of ground material, the distributing, chopping and spreading of manure substances or the removal of silage from a storage heap, which device comprises:

at least one rotor with a number of elongate working members, such as wires, rods, bars or strips, the ends of which are fixed to two attachment elements, such as two groups of spokes or two discs, coupled to a rotating shaft such that they extend at least more or less parallel to and at an interval from the rotating shaft, and

driving means for rotary driving of the or each rotor.

The invention has for its object to embody a device such that the chance of breakage or otherwise damaging of the working members is greatly reduced. The invention further aims to execute a device such that if a working member must nevertheless be replaced, this replacement can be carried out in a minimal time.

The invention provides with a view thereto a device of the type referred to in the preamble which is characterized by spring means holding the working members under tensile stress. If desired a spring member can be added to each working member. Preference is however given to a cheaper but nonetheless completely reliable embodiment which displays the feature that the rotating shaft comprises at least two telescopically co-acting shaft parts locked against relative rotation and that the attachment elements are forced away from each other by the spring means.

FIG.15

## Device for working more or less loose material

The invention relates to a device for the working of more or less loose material, such as mixing and levelling of animal feed in a storage holder, working of a surface layer of ground material, such as the aerating, levelling and harrowing thereof and/or the removing of weeds therefrom, and the chopping of those weeds, the distributing and mixing of mixed manure through a surface layer of ground material, the distributing, chopping and spreading of manure substances or the removal of silage from a storage heap, which device comprises:

at least one rotor with a number of elongate working members, such as wires, rods, bars or strips, the ends of which are fixed to two attachment elements, such as two groups of spokes or two discs, coupled to a rotating shaft such that they extend at least more or less parallel to and at an interval from the rotating shaft, and

driving means for rotary driving of the or each rotor.

Such a device is known from among others US-A-2.669.173, US-A-1.591.396, EP-A-12.527, US-A-1.710.781, US-A-2.123.972, GB-A-2.139.911, and GB-A-2.035.822.

These known devices comprise elongate working members, which are either naturally stiff through the choice of material and/or a stiffening form, or are stiffened by tensile stress. With the use of these known devices there is the danger that during operation the working members come into contact with hard pieces, for instance stones, in the material for working, as a result of which the working members can be damaged, which results in a lessening of the effectiveness of the working and, after ascertaining of the disturbance, causes a usually lengthy operational stoppage.

The invention has for its object to embody a device such that the chance of breakage or otherwise damaging of the working members is greatly reduced. The invention further aims to execute a device such that if a working member must nevertheless be replaced, this replacement can be carried out in a minimal time.

The invention provides with a view thereto a device of the type referred to in the preamble which is characterized by spring means holding the working members under tensile stress. If desired a spring member can be added to each working member. Preference is however given to a cheaper but nonetheless completely reliable embodiment which displays the feature that the rotating shaft comprises at least two telescopically co-acting shaft parts locked against relative rotation and that the attachment elements are forced away from each other by the spring means.

A device for the working of a surface layer of ground material can with advantage be characterized by means for adjusting the working depth, that is, the depth to which the working members are placed into the ground material while being driven through that material.

Such a device may also be characterized by at least two rotors each having an individual rotating shaft, these rotors being within certain limits movable up and down independently of each other. With such a device the working depth can be maintained even if the surface has an irregular course.

The two above mentioned embodiments can have the special feature that the or each rotor is carried by an auxiliary frame that is rollable over the ground by means of a wheel having an adjustable vertical position.

Such a device having at least two rotors can display the special feature that each auxiliary frame is carried for vertical pivoting by a main frame. This main frame may bear coupling means for attachment to a tractor, and carry a transmission unit for causing rotary driving of the or each rotor by the tractor.

Each auxiliary frame can advantageously be carried by the main frame via a parallelogram construction. An almost completely vertical up and downward displacement of the auxiliary frame hereby takes place, which furthers the constant depth of the working.

A preferred embodiment has the feature that the rotating shafts of adjacent rotors are connected to each other by flexible, torsion stiff drive shafts and that the driving means are common for all rotors. Through the use of the flexible drive shafts between the respective rotors an independent up and downward displacement of the rotors can be effected using simple means.

In order to achieve a sufficiently great length of the working members for the intended purpose, for instance the removal of weed between rows of plants, whereby a sufficiently great available length must nevertheless be ensured for the arranging of the flexible drive shafts, a variant can with advantage be used displaying the feature that at least one attachment element possesses a form that is by and large hollow towards the outside, for example the form of a dish with standing edge, such that the pivot shaft of the associated rotor has a lesser length than the working members of this rotor, and that as a result of the cavity defined by the hollow form a space is available that is accessible from outside. The said space accessible from outside can be utilised for coupling of the relevant rotor on the auxiliary frame, without this having an adverse effect on the effective length of the working members.

A preferred embodiment has the feature that each working member possesses two hook-like ends for co-operation with fixing zones of the attachment elements adapted thereto. Should it be necessary to replace working members, the attachment elements can be moved towards each other counter to the action of the spring means by means of a suitable tool, such as tongs or the like. The tensile stress in the working members is thereby removed, as a result of which the hook-shaped ends can easily be released from the fixing zones of the attachment elements. After fitting of a replacement working member the action of the spring means can be re-asserted by release of the tool, which results in the attachment elements being forced apart and the newly fitted working member also being placed and held under the desired tensile stress.

The rotors can be formed such that the working members of each rotor are located in an imaginary cylindrical plane.

The required spring force can be realized through the use of prestressed spokes for the attachment elements. The term "spoke" should be interpreted broadly in this respect. An element of a disc tapering slightly to the outside may already possess a comparatively great resilient flexibility. Even a round disc may already have sufficient resilience, provided the mutual distance between two discs serving as attachment elements and the effective length of the working members are adapted to each other.

The rotating shaft of a rotor or a group of rotors may if required take a tubular form and consist of two or more telescopically co-acting parts. In the case of a hollow embodiment a compression spring can be present inside the rotating shaft, thereby ensuring without additional provisions a good sealing of the compression spring against dust, dirt and the like.

For locking the telescopically co-acting shaft parts against relative rotation, these parts can possess a non-round complementary form. Use may if desired also be made of an eccentrically positioned telescopic locking shaft.

The material, the profile and the dimensioning of the working members can be selected on the basis of a specific application. So for example a material with tensile strength, for instance steel, a strong artificial fibre, carbon, glass, boron or the like can be used. In order to obtain a good cutting effect the working members can display at least one cutting side and have for instance a triangular cross sectional form.

Second driving means can be added to the device for the forward movement of the device at least more or less transversely of the rotation centre line of the or each rotor. In this case the use of a tractor can be dispensed with.

Known from the aforementioned literature is the use of a driving from the wheels travelling over the ground and supporting the device. Such a construction has the drawback that the rotation speed of the rotors is necessarily restricted as a result. In accordance with the invention use is therefore preferably made of drive means actuated by a motor. This motor may for example form part of a tractor with output shaft or the hydraulic system present in a tractor, in which latter case the device can be provided with one or more hydro-motors.

Use is preferably made of an embodiment wherein the drive means drive the rotors in a direction such that the working members move through the surface layer in a direction opposite to the direction of movement of the device. Hereby achieved is that thrown up ground material or weed is transported to the rear and thrown up. It has been found that with sufficient rotational velocity of the elongate members weeds for instance are chopped up by the moving working members in the movement through the ground and the air and drift down as a result gently and well spread onto the ground, whereby a good cutting and drying can be obtained.

There now follows a short explanation of the invention on the basis of a practical example. A crop such as maize is planted in rows with a certain mutual interspacing. The growth of maize is hampered by weed, such as couch grass among others. This is not easily controlled with poison, since agricultural poisons are not effective in this application. Moreover, poison is not beneficial to the environment.

The device according to the invention is now excellently suited to the removal of weed between the rows of plants. To this end the mutual distance of the rotors is chosen such that these rotors fit between the rows of plants, so that these are not affected by the device. During travel between the rows of plants the working members move at a rotation speed to be selected that is determined by the drive elements, in each case over a circular arcuate path through the ground. It will be apparent here that not only an underlayer is worked, but that the entire top layer of the ground material is worked by the device.

The invention further relates to a mixed manure spreader with a device according to the invention, preferably covered by a splash guard, beneath which a feed for the mixed manure can be present.

The invention will now be elucidated with reference to the drawing of several embodiments, to which the invention is not however restricted. In the drawing:

Fig. 1 shows a highly simplified perspective view of a device according to the invention;

Fig. 2 is a variant;

Fig. 3 is another variant;

Fig. 4 shows a lengthwise section through the device as in fig. 1;

Fig. 5 is a cross section V-V from fig. 4;

Fig. 6 is a lengthwise section through a variant corresponding to fig. 4;

Fig. 7 shows schematically a ground working action;

Fig. 8 shows an animal feed mixing and dosing device;

Fig. 9 is a cross section through a mixed manure spreader for grassland;

Fig. 10 is a cross section through a mixed manure spreader for arable farming;

Fig. 11 shows a perspective view of a rotor with ropes provided with individual tensioning means;

Fig. 12 is a cross section on a larger scale of the tensioning means as in fig. 11;

Fig. 13 shows a rotor with tensioning means for all ropes jointly;

Fig. 14 is a highly schematic side view of a silage remover according to the invention;

Fig. 15 shows a weeding machine with a number of rotors in perspective view;

Fig. 16 shows on a larger scale partly a top view and partly a cross section through the device from fig. 15; and

Fig. 17 is a view corresponding with fig. 16 of an alternative rotor.

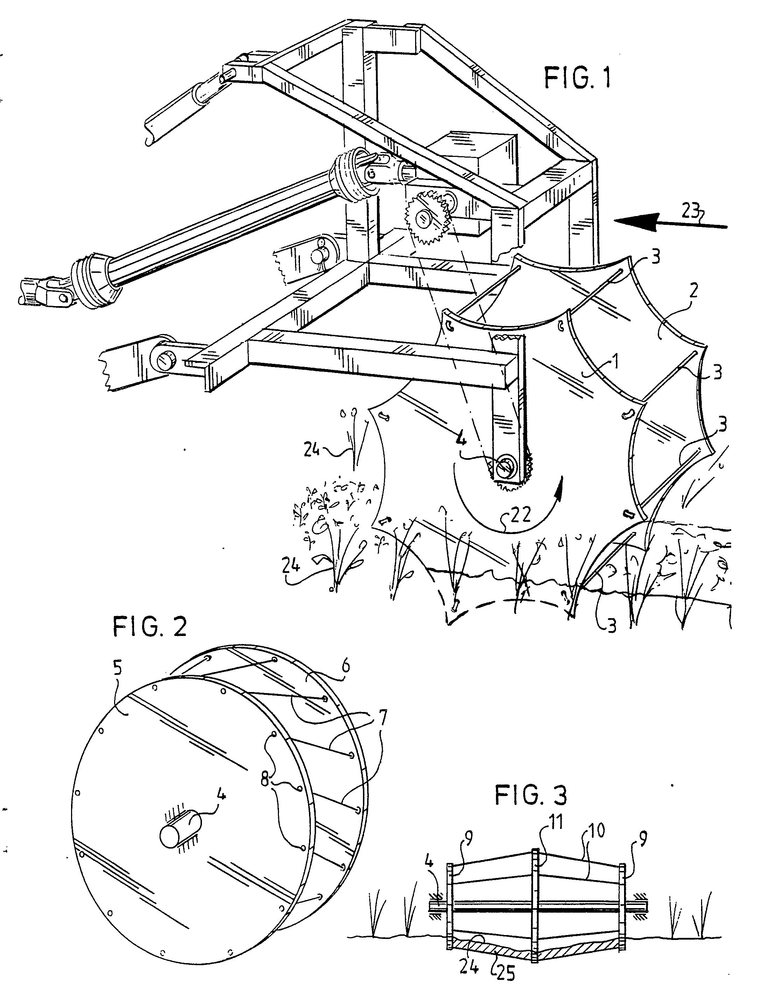

Fig. 1 shows two attachment discs 1, 2 which have more or less the form of an eight-pointed star. Stretched between the points of the star are wires 3. The discs 1, 2 are carried by a rotatably drivable rotating shaft 4. The form of discs 1, 2 ensures a certain resilience at the fixing zones, that is, the points of the star.

Fig. 2 shows a variant, wherein discs 5, 6 are circular and each have on their periphery twelve fixing eyes for wires 7. These wires 7 are each fitted in staggered arrangement to the relevant fixing eyes 8 such that the wires assume a slanting position relative to rotating shaft 4. As a result of the elastic characteristics of the discs 5, 6 and the length of wires 7, these latter are resiliently biased.

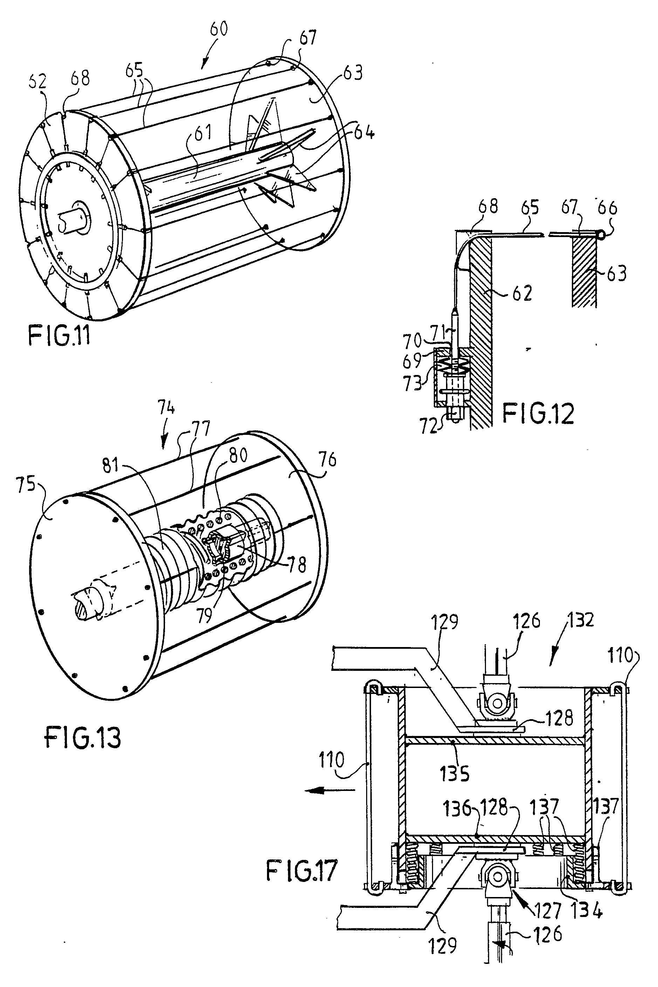

Fig. 3 shows an embodiment with two attachment discs 9 and tensioned wires 10, which are held in their central area at a greater radial distance from the rotating shaft 4 by a spacer 11. It will be apparent that as a result of the form obtained a hollow strip 24 can also be worked to a required depth, as is indicated with the lined portion 25. Because of the flexibility of the attachment discs 9 the wires 10 are resiliently biased. Prior to discussion of the figures 11-17 it is noted that the rotating shaft 4 may also take a telescopic form. Spring means then force the discs 9 apart.

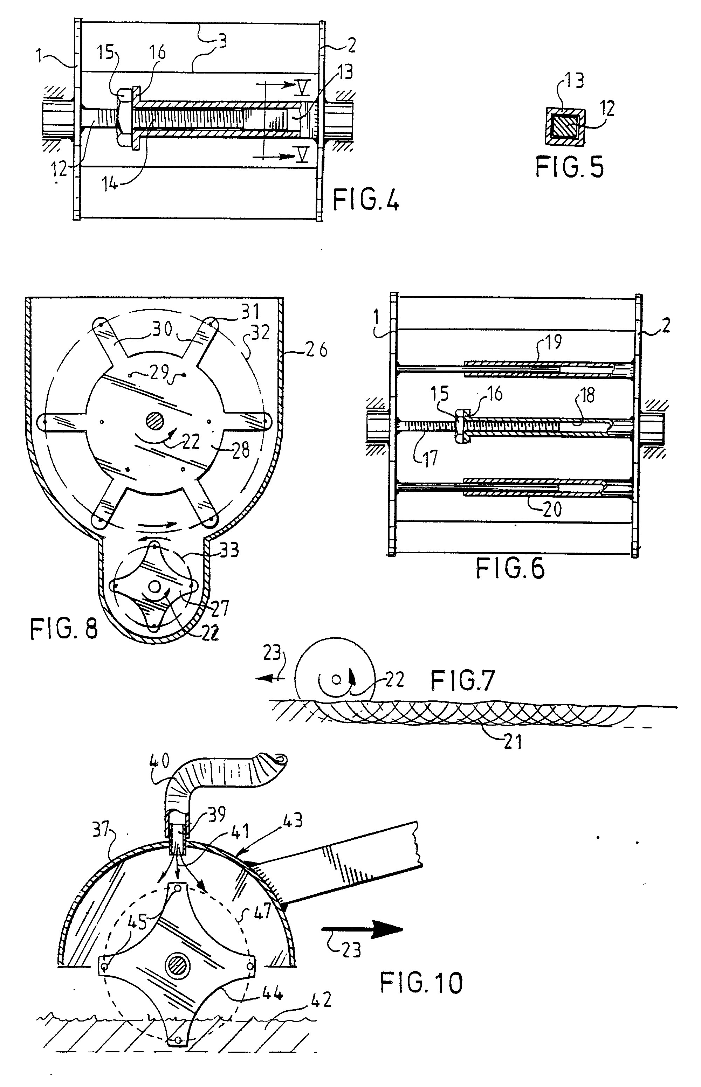

Fig. 4 shows that the rotating shaft between discs 1, 2 consists of two telescopically co-acting parts. A part 12 extends partially into a hollow part 13. These parts 12, 13 are connected to the respective discs 1 and 2. The part 12 is provided with external thread 14 with which a nut 15 co-acts. This nut 15 can press against a flange 16 on the end of the tubular part 13. In this way the discs 1, 2 can be forced apart, whereby the wires 3 are tensioned. The resilience of the discs 1, 2 ensures a resilient bias of the wires 3.

Fig. 5 shows the cross section through the parts 12, 13. It will be apparent that through the more or less square form these parts are locked against axial rotation.

Fig. 6 shows a variant wherein the elements 17, 18, which correspond with the parts 12, 13, take a round form. Therefore placed between the discs 1, 2 for securing purposes are two extra telescopic locking elements 19, 20.

Fig. 7 shows schematically how the device according to the invention is capable of aerating an entire surface layer and ridding it of weeds. Designated schematically with 21 are the successive paths followed by the wires through the surface layer of ground material. Indicated in the figures 1 and 7 by an arrow 22 is the rotation direction of the attach ment discs with wires, while the travel direction of the device is indicated with arrow 23. It will be apparent in the light of the figures 1 and 7 that the entire top layer is worked and that the working width is controlled by a suitable choice of the distance between the discs 1, 2, so that the maize plants 24 previously mentioned by way of example are left unaffected and the strip with weeds between the maize plants 24 can be worked. The rotation speed of shaft 4 determines together with the travel speed of the device and the mutual distance of the wires 3 the fineness or coarseness of the working.

Fig. 8 shows an animal feed mixing and dosing device 26 in which are situated two mixers 27, 28. These mixers each consist of two rotatably drivable attachment discs placed at an interval from each other, between which wires are stretched in accordance with the above described embodiments. The lower mixer 27 has star-shaped discs with four points. The mixer 28 has discs with spoke-shaped ends. Located on the disc are fixing points 29 for wires, while the spokes 30 have fixing points 31 for wires. The form of the housing of the device 26 is adapted in the manner shown to the path (indicated respectively with 32 and 33) of the wires. The spokes 30 ensure a sufficient resilience to hold the wires under resilient bias. For applying and maintaining this tension a tensioning device analogous to that of fig. 4 or 6 can be used.

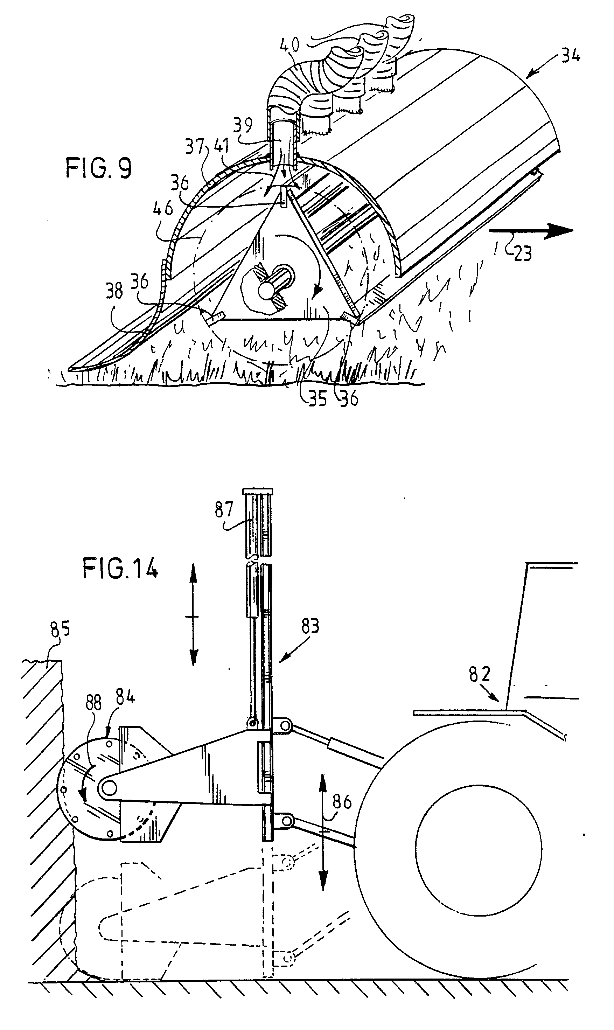

Fig. 9 shows a mixed manure spreader 34 for land under grass. In accordance with the above discussed embodiments of the invention this device 34 comprises two, in this case equilateral triangular discs 35, between the corner points of which extend partition elements 36. The rotor 35, 36 is covered by a substantially semi-cylindrical splash guard 37, on the rear part of which is situated a flexible strip 38, likewise guarding against splashing. Connecting onto the top of splash guard 37 are a number of feed nozzles 39 which are connected via conduits 40 to a storage holder for mixed manure. By means of pump means (not drawn), for instance a jack or a high pressure pump, the manure is fed as according to arrows 41 into the space under splash guard 37. Through the rotation of rotor 35, 36 the manure is spread beneath the splash guard 37 and applied to the ground with some force. Otherwise than in the case of many usual devices an effective penetration of the manure into the ground is hereby achieved, resulting in a smaller emission of ammonia.

Fig. 10 shows a mixed manure spreader 43 which is designed for arable farming. Corresponding components are designated in this figure with the same reference numerals as in fig. 9.

The rotor consists in this case of two more or less star-shaped discs 44 between which wires 45 are stretched. It will be apparent that the device 43 is suitable for working a surface layer of the ground. The mixed manure injected into the space beneath the splash guard 37 is worked effectively into the surface layer 45 by the rotor. To make clear the difference between the figures 9 and 10 the peripheral paths of the elongate members 36, 45 are designated respectively with 46 and 47. The path 46 extends wholly above the surface of the ground 42, while the path 47 extends into the ground. In the figures 9 and 10 the transporting direction is indicated with the reference numeral 23. Not indicated in the above discussed figures are means for setting the working depth, that is the maximum depth to which a ground working device according to the invention can be operated. Such means may take a hydraulic, pneumatic or mechanical form.

Fig. 11 shows a rotor 60 with a shaft and discs 62, 63 attached thereto. Shores 64 serve for strengthening and stiffening. Extending on the periphery between discs 62, 63 are ropes 65 placed under tensile stress. Each rope can be tensioned individually by means of tensioning means to be described with reference to figure 12.

Fig. 12 shows how a rope 65 is fastened for tensioning between discs 62 and 63. The rope 65 bears on its end a thickening 66 so that the rope 65 but not the thickening 66 can pass through a hole 67 present in disc 63. The disc 62 receives rope 65 via a shallow recess 68 on its periphery.

The disc 62 bears a ring 69 with a through-hole 70 for each rope. Extending through this hole 70 is a fastening element 71 which can be drawn tighter by means of a nut 72. Spring washers 73 ensure that when a certain tensile stress is reached in the rope 65 it is not too heavily loaded, since the spring washers are compressed.

The rotor as in figures 11 and 12 possesses for each rope the above described individual tensioning member.

Fig. 13 shows an embodiment wherein spring means are present, which are common for all ropes. The rotor 74 shown in figure 13 comprises two discs 75, 76 between which extend ropes 77. Discs 75, 76 are coupled to each other by means of two non-round shaft parts 78, 79 that are telescopically slidable relative to each other. A compression spring 80 forces the discs 75, 76 apart and ensures as a result the tensile stress in the ropes 77. In order to prevent damage and dirtying, the shaft 78, 79 and the compression spring 80 extending around it is wholly encased by a bellows 81.

The non-round form of the shaft parts 78, 79 ensures a rotation locking, which is in any case required to ensure the fixed position of ropes 77. If during displacement through the ground a rope 77 touches a stone, the tensile stress in the relevant rope 77 will increase sharply, resulting in the discs 75, 76 being forced towards each other counter to the action of compression spring 80. Practical experience shows that as a result of the movement of the relevant rope 77 along the stone the contact between the two is quickly broken, which results in the rotor 74 re-assuming its normal position under the influence of the compression spring 80.

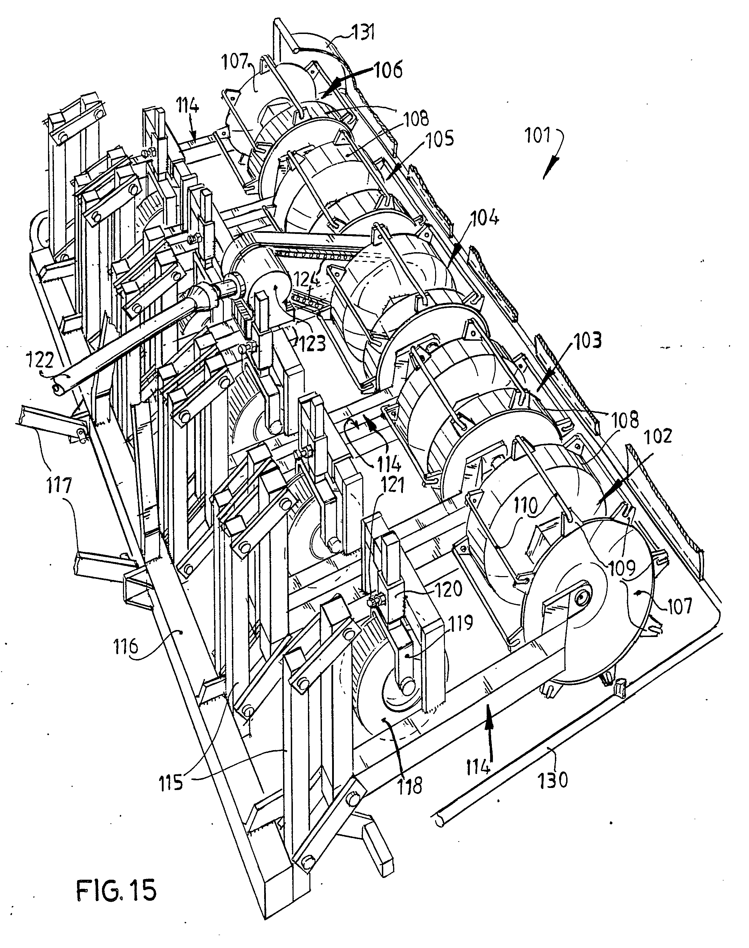

Fig. 14 shows a tractor 82 with support means 83 for a device 84 according to the invention for removal of silage from a heap 85. This figure is only very schematic. It serves only as elucidation of a possible application of the device according to the invention. The support means are adjustable as according to an arrow 86. By means of a hydraulic cylinder 87 forming part of the support means 83 the device 84, after being positioned in the correct manner with respect to the heap 85, can be driven for rotation according to an arrow 88 by means of non-drawn means for the removal of silage from the heap 85.

Attention is drawn to the fact that a device for removal of silage may take yet another form within the scope of the invention. More rotors can for example be used which have a rotation direction relative to one another to be determined subsequently and which may be the same or be groups of two running in opposing directions. The rotors can be attached to swivel arms and be horizontally or vertically movable. The silage remover may be further provided with discharge means, such as a conveyor belt or jack.

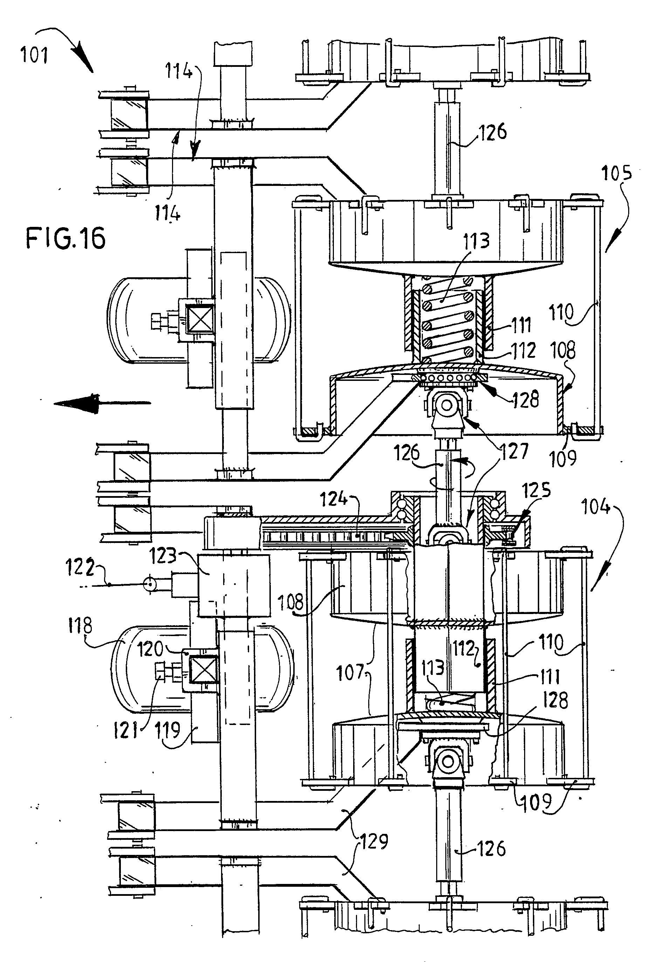

Fig. 15 shows a preferred embodiment of the invention designated with 101. This device 101 is intended for the working of a surface layer of ground material. Figure 15 shows the device in perspective view, while figure 16 shows more clearly on a larger scale and partially in section the essential construction according to the invention. The following discussion refers to the figures 15 and 16.

The device 101 comprises five rotors 102, 103, 104, 105, 106. These rotors comprise dishes 107, all of which except both the outside ones possess a standing edge 108. The outside dishes 107 and the standing edges 108 of the dishes 107 located between them bear projections 109 which carry pair-wise elongate working members 110. These working members 110 each have two hook-like ends for co-operation with a recess on the end of each projection and a hole in the middle thereof. This manner of attachment enables a simple replacement of working members 110, as will be described hereinafter.

The dishes 107 each bear a telescope shaft part 111, 112 which respective outer and inner telescope shaft parts co-act telescopically with each other. The inner telescope shaft part 112 also takes a hollow form and encloses together with the outer telescope shaft part 111 a compression spring 113 which forces apart the dishes 107, thereby holding the rod-like working members 110 under resilient bias.

By moving the dishes 107 towards each other using a suitable tool the spring tension can be removed from the working rods 110 so that they can be replaced with other rods, for instance in the case of damage or breakage.

Each rotor 102-106 is carried by an auxiliary frame, which auxiliary frames are all designated with the reference numeral 114. Each auxiliary frame is supported via its own pair of parallelogram constructions 115 by a main frame 116 with a linkage unit 117 for coupling to a tractor. Each auxiliary frame 114 can in addition travel over the ground by means of a height adjustable wheel 118. The wheel is carried for this purpose by a support 119 which is guided in an eye 120 arranged on auxiliary frame 114. Height adjustment can be fixed by a locking screw 121. Through this construction the height adjustment of wheel 118 using the screw 121 corresponds with the height adjustment of the associated rotor 102-106, as a result of which the working depth, that is, the depth to which the working rods are carried into the ground during their driving, can be adjusted.

Through the suspension of each rotor 102-106 from an individual auxiliary frame 114 the rotors can be moved up and downward independently of each other.

Use is nevertheless made of a central driving device with which all rotors 102-106 are jointly driven.

In this embodiment the device 101 is drawn by a tractor (not drawn) which has an output drive shaft coupling. Coupled to this drive shaft coupling is a shaft 122 which drives a chain 124 via a transmission box 123. This chain 124 is guided round a drive gear wheel 125 that is coupled to the rotor 104.

Rotors 102-106 are linked to one another by coupling and drive shafts 126 which are coupled to the respective rotors 102-106 via cardan couplings 127. This construction is functionally the same as a flexible, torsion stiff drive shaft. This continuous drive construction also ensures within certain limits an independent up and downward movability of rotors 102-106.

The dishes 107 with their standing edges 108 bound a hollow space which, as will be apparent from figure 16, is available for the coupling and drive shafts 126 and the cardan couplings 127. In this way the effective length of the working rods 110 is not limited by the minimum necessary length of drive shafts 126. The mentioned hollow space is also used for suspension by means of ball bearings 128 of the rotors on the auxiliary frame parts 129 forming part of the auxiliary frames 114. As is indicated in figure 16 the construction varies only in the area of the driving chain 124.

The frame 116 bears via a bracket 130 five splash guards 131 which, for the sake of clarity in figure 15, are only partially drawn. These splash guards 131 serve to hold back for example ground material thrown up with force and to prevent to some extent the generation of dust.

When a rotor 102-106 comes into contact with a stone present in the ground during rapid rotating movement, the tensile stress in the relevant working rod momentarily increases sharply, with the result that the dishes 107 of the rotor in question are moved towards each other during simultaneous compression of the compression spring 113. As a consequence the shock-wise occurring tensile stress cannot break the relevant working rod because the compression spring 113 limits the force being exerted.

Fig. 17 shows a rotor 132 possessing a slightly different construction from the rotors 102-106.

Rotor 132 comprises two parts 133, 134 telescopically slidable relative to each other with respective end walls 135, 136 which fulfil the same function as the dishes 107 of the device 101. The end walls 135, 136 are however coupled rigidly to each other and form part of the rotor part 133. The rotor part 134 is telescopically slidable relative to rotor part 133 and is forced away therefrom by compression springs 137 grouped in annular manner, which results in a tensile stress being maintained in the working rods 110.

It will be apparent that within the scope of the invention other embodiments and combinations of the features described are also possible.

## Claims

1. Device for the working of more or less loose material, such as mixing and levelling of animal feed in a storage holder, working of a surface layer of ground material, such as the aerating, levelling and harrowing thereof and/or the removing of weeds therefrom, and the chopping of those weeds, the distributing and mixing of mixed manure through a surface layer of ground material, the distributing, chopping and spreading of manure substances or the removal of silage from a storage heap, which device comprises:
at least one rotor with a number of elongate working members, such as wires, rods, bars or strips, the ends of which are attached to two attachment elements, such as two groups of spokes or two discs, coupled to a rotating shaft such that they extend at least more or less parallel to and at an interval from said rotating shaft, and
driving means for rotary driving of the or each rotor,
**characterized by**
spring means holding said working members under tensile stress.

2. Device as claimed in claim 1, **characterized in that** the rotating shaft comprises at least two telescopically co-acting shaft parts locked against relative rotation and that the attachment elements are forced away from each other by the spring means.

3. Device as claimed in claim 1 or 2 for the working of a surface layer of ground material, **characterized by** means for adjusting the working depth, that is, the depth to which the working members are placed into the ground material while being driven through that material.

4. Device as claimed in any of the foregoing claims for the working of a surface layer of ground material, **characterized by** at least two rotors each having an individual rotating shaft, these rotors being within certain limits movable up and down independently of each other.

5. Device as claimed in claim 3 or 4, **characterized in that** the or each rotor is carried by an auxiliary frame that is rollable over the ground by means of a wheel having an adjustable vertical position.

6. Device as claimed in claim 5 having at least two rotors, **characterized in that** each auxiliary frame is carried for vertical pivoting by a main frame.

7. Device as claimed in claim 6, **characterized in that** each auxiliary frame is carried by the main frame via a parallelogram construction.

8. Device as claimed in claim 4, **characterized in that** the rotating shafts of adjacent rotors are connected to each other by flexible, torsion stiff drive shafts and that the driving means are common for all rotors.

9. Device as claimed in claim 8, **characterized in that** at least one attachment element possesses a form that is by and large hollow towards the outside, for example the form of a dish with standing edge, such that the pivot shaft of the associated rotor has a lesser length than the working members of this rotor, and that as a result of the cavity defined by the hollow form a space is available that is accessible from outside.

10. Device as claimed in any of the foregoing claims, **characterized in that** each working member possesses two hook-like ends for co-operation with fixing zones of the attachment elements adapted thereto.

FIG. 1

FIG. 2

FIG. 3

13564-6.PP

FIG.4

FIG.5

FIG.8

FIG.6

FIG.7

FIG.10

'3564-6PP

FIG. 9

FIG.14

3564-6PP

FIG.11

FIG.12

FIG.13

FIG.17

3564-6PP

FIG. 15

13564 - 6PP

FIG.16

3564-6PP